# NEUE EUROPÄISCHE PATENTSCHRIFT

(11) **EP 1 136 238 B2**
(45) Veröffentlichungstag und Bekanntmachung des Hinweises auf die Entscheidung über den Einspruch: **29.11.2017**
(45) Hinweis auf die Patenterteilung: 22.04.2009
(21) Anmeldenummer: 01102981.6
(22) Anmeldetag: 08.02.2001
(51) Int. Cl.: B29C 70/44, B29C 35/00

(54) **Verfahren und Vorrichtung zur Herstellung eines Werkstücks aus einem faserverstärkten Werkstoff**
Method and apparatus for manufacturing a workpiece from fibre reinforced material
Procédé et dispositif pour la fabrication d'une pièce en matière renforcée par des fibres

(30) Priorität: 17.03.2000 DE 10013409
(43) Veröffentlichungstag der Anmeldung: 26.09.2001
(73) Patentinhaber: Deutsches Zentrum für Luft- und Raumfahrt e.V., 51147 Köln (DE)
(72) Erfinder: Hinz, Bernhard, Dr., 70794 Filderstadt (DE)
(74) Vertreter: Hoeger, Stellrecht & Partner Patentanwälte mbB

(56) Entgegenhaltungen:
- DE-C- 10 013 409
- GB-A- 1 441 919
- US-A- 4 942 013
- US-A- 5 403 537

## Beschreibung

Die Erfindung betrifft eine Vorrichtung zur Durchführung eines Verfahrens zur Herstellung eines Bauteils aus einem faserverstarkten Werkstoff, bei welchem einem Faserhalbzeug mittels Unterdruckbeaufschlagung flüssiges Harz zugeführt wird.

Solche Verfahren sind aus dem Stand der Technik bekannt und werden auch als Vakuuminjektionsverfahren bezeichnet.

Vakuuminjektionsverfahren sind beispielsweise aus der US 4,902,215, US 5,052,906, US 5,601,852, US 5,439,635 oder WO 94/20278 bekannt.

Die US 5,403,537 offenbart ein Verfahren zur Erzeugung von Kompositstrukturen. Es wird dabei eine Anzahl von Faserlagen gelegt. Durch Vakuumbeaufschlagung wird Luft evakuiert und es erfolgt eine Konsolidierung. Harz wird über Strömungspfade infiltriert.

Aus der DE 100 13 409 C1 ist ein Verfahren zur Herstellung von faserverstärkten Kunststoff-Bauteilen aus trockenen Faserverbund-Halbzeugen mittels eines Injektionsverfahrens zur Injektion von Matrix-Material bekannt, bei dem ein erster Raum mittels einer gasdurchlässigen und Matrix-Material-undurchlässigen Membran gebildet ist und ein zweiter Raum gebildet ist, welcher am ersten Raum anliegt, der von der Umgebung mittels einer gas- und Matrix-Material-undurchlässigen Folie abgegrenzt ist und wobei Luft aus dem zweiten Raum abgesaugt wird und dadurch Matrix-Material aus einem Vorratsbehälter in den evakuierten ersten Raum gesaugt wird.

Der Erfindung liegt die Aufgabe zugrunde, eine Vorrichtung der eingangs genannten Art zu schaffen, mittels der sich Bauteile hoher Qualität herstellen lassen und sich insbesondere auch grossflächige Bauteile herstellen lassen.

Diese Aufgabe wird durch eine Vorrichtung mit den Merkmalen gemäss Anspruch 1 gelöst.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung einer Anordnung zur Durchführung eines Verfahrens zur Herstellung eines Werkstücks aus einem faserverstärkten Werkstoff;
- Figur 2: eine Variante einer Anordnung eines Vakuumports;
- Figur 3: den Verlauf einer Harzfließfront am Rande eines Werkstücks gemäß dem Stand der Technik;
- Figur 4: eine erste Ausführungsform einer erfindungsgemäßen Anordnung, bei welcher der Verlauf einer Harzfließfront gezielt eingestellt wird;
- Figur 5: eine zweite Variante einer Anordnung zur gezielten Einstellung eines bestimmten Harzfrontverlaufs in der Nähe eines Rands des Werkstücks;
- Figur 6(a): eine schematische Schnittansicht einer Vorrichtung zur Herstellung eines Werkstücks aus einem faserverstärkten Werkstoff mittels Vakuuminjektion;
- Figur 6(b): eine Draufsicht auf die Vorrichtung gemäß Figur 6(a);
- Figur 7: den Verlauf einer Harzfließfront an einer Kante des Werkstücks gemäß dem Stand der Technik;
- Figur 8: einen vergrößerten Ausschnitt aus Figur 6(a), den Verlauf einer Harzfront zeigend, wenn ein Verteilergewebe erfindungsgemäß angeordnet und ausgebildet ist;
- Figur 9: die Siedepunktkurve des heißhärtenden Harzes Hexcel RTM6;
- Figur 10: die Temperaturabhängigkeit der dynamischen Viskosität von flüssigem Hexcel RTM6;
- Figur 11: die Temperaturabhängigkeit der Verarbeitungszeit t^{*} von Hexcel RTM6 und
- Figur 12: einen schematischen Verlauf von Druck und Temperatur über der Zeit bei einer Herstellungsvariante eines Bauteils.

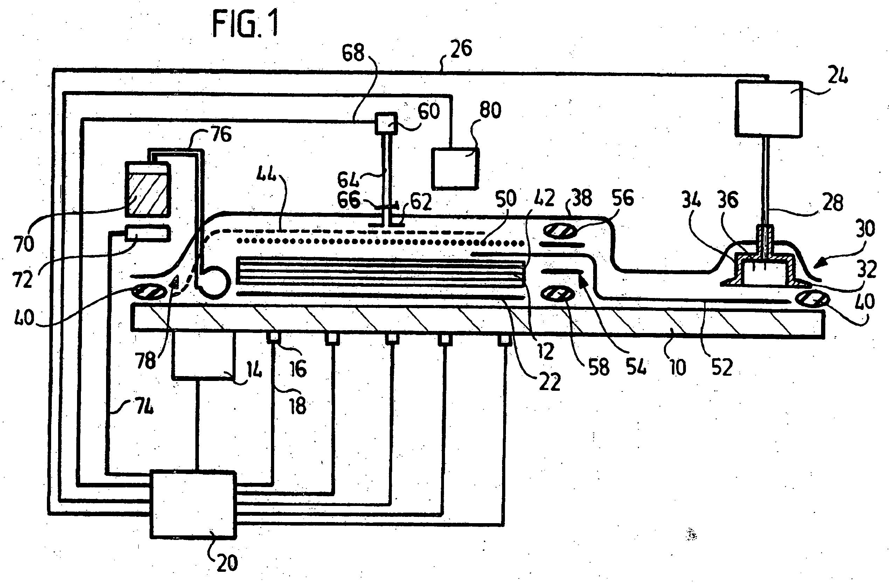

Bei einem Verfahren zur Herstellung eines Bauteils aus einem faserverstärkten Werkstoff ist, wie in Figur 1 mittels eines Ausführungsbeispiels einer nicht erfindungsgemäßen Anordnung schematisch dargestellt, eine beheizbare Form 10 vorgesehen, an welcher ein Faserhalbzeug 12 positionierbar ist. Die Form 10 ist dabei vorzugsweise eine einseitige Form. Das Faserhalbzeug 12 weist insbesondere eine Laminatstruktur auf.

Die Form 10 ist über eine Heizvorrichtung 14 heizbar, und zwar insbesondere so, daß mindestens über den Formbereich, in dem eine Bauteilherstellung erfolgt, die Temperatur gezielt einstellbar ist. Bei einer Variante einer Ausführungsform wird die Temperatur der Form 10 über eine Mehrzahl von Temperatursensoren 16 überwacht, welche jeweils über eine Meßsignalleitung 18 mit einer Steuerungs- und Regelungsvorrichtung 20 verbunden sind, um an diese ein Temperaturmeßresultat zu liefern.

Zwischen dem Faserhalbzeug 12 und der Form 10 ist ein Trennmittel 22 beispielsweise in der Form einer Trennfolie angeordnet, um die Lösung eines ausgehärteten Bauteils aus der Form 10 zu erleichtern.

Dem Faserhalbzeug 12 wird Harz durch Unterdruckbeaufschlagung zugeführt (Vakuuminjektion). Dazu ist eine Vakuumpumpe 24 vorgesehen, deren Leistung insbesondere steuerbar ist, um so gezielt einen bestimmten Unterdruck bei der Bauteilherstellung einstellen zu können. Vorzugsweise ist die Vakuumpumpe 24 dazu über eine Steuerleitung 26 mit der Steuerungs- und Regelungsvorrichtung 20 verbunden, über welche eben die Pumpenleistung steuerbar ist. Die Vakuumpumpe 24 ist weiterhin über eine Saugleitung 28 mit einem Vakuumport 30 verbunden, welcher einen Flansch 32 aufweist, der an einem becherförmigen Aufnahmeelement 34 gebildet ist. Durch den Flansch 32 läßt sich das Aufnahmeelement 34 aufsetzen, wobei eine große Auflagefläche bereitgestellt ist, so daß ein Abdruck des Aufnahmeelements 34 weitgehend vermeidbar ist und auch das Abklemmen von Zwischengewebelagen wie eines Verteilergewebes oder eines Peel-Ply's.

In dem Aufnahmeelement 34 ist ein Aufnahmeraum 36 gebildet, welcher auf einer Seite mit der Vakuumpumpe 24 in Verbindung steht und welcher auf der anderen Seite hin offen ist, so daß über ihn eine Wirkverbindung zur Unterdruckbeaufschlagung des Werkstücks herstellbar ist. Der Aufnahmeraum 36 kann, wie unten noch näher beschrieben wird, entsprechend seinem Volumen Harz aufnehmen, so daß das Einsaugen von Harz in die Saugleitung 28 durch die Ausbildung des Vakuumports 30 als Harzfalle (Harzpuffer) vermeidbar ist.

Für den Druckabschluß des Werkstücks gegenüber dem Außenraum ist über diesem eine Vakuumfolie 38 angeordnet, unterhalb welcher die durch die Vakuumpumpe 24 erzeugte Unterdruckbeaufschlagung wirksam ist, die zu einer Harzansaugung und damit Harz-Infiltration des Faserhalbzeugs 12 führt. Zwischen der Vakuumfolie 38 und der Form 10 ist zur Druckabdichtung um das Werkstück eine Dichtung 40 beispielsweise in der Form eines Dichtungsbandes angeordnet. Auch in dem Bereich, in welchem der Vakuumport 30 bzw. die Saugleitung 28 durch die Vakuumfolie 38 hindurchgeführt ist, ist eine Dichtung angeordnet. Vorteilhafterweise ist weiterhin eine Oberseite des Flansches 32 abgeschrägt ausgebildet, so daß der Flansch kegelstumpfförmig ausgebildet ist mit einem Kegelwinkel, der beispielsweise in der Größenordnung von 150° liegt. Die Oberseite des Flansches 32 kann dann als Dichtfläche für die Vakuumfolie 38 verwendet werden.

Es kann insbesondere auch eine Mehrzahl von Vakuumports und auch Vakuumpumpen vorgesehen werden, die an unterschiedlichen Stellen bei der Anordnung zur Herstellung des Bauteils positioniert sind. Ein Vakuumport ist dabei in einem Abstand zu einem Rand 42 des Faserhalbzeugs 12 positioniert, welcher bei der Harzinjektion von der Fließfront des flüssigen Harzes zuletzt erreicht wird. Dieser Vakuumport wird daher auch zuletzt von Harz erreicht und die Unterdruckbeaufschlagung über diesen Vakuumport ist so lange ausübbar, bis eben die Harzfront diesen Vakuumport erreicht.

Um das Faserhalbzeug 12 ist ein Verteilergewebe 44 angeordnet, welches als Fließhilfe für das Harz zur Zuführung zu dem Faserhalbzeug dient. In dem Verteilergewebe 44 sind Fließkanäle für das Harz gebildet, um eben dieses flächig über dem Faserhalbzeug 12 zu verteilen. Darüber hinaus ist das Verteilergewebe 44 so ausgebildet, daß die Unterdruckbeaufschlagung des Faserhalbzeugs 12 gleichmäßig durchführbar ist.

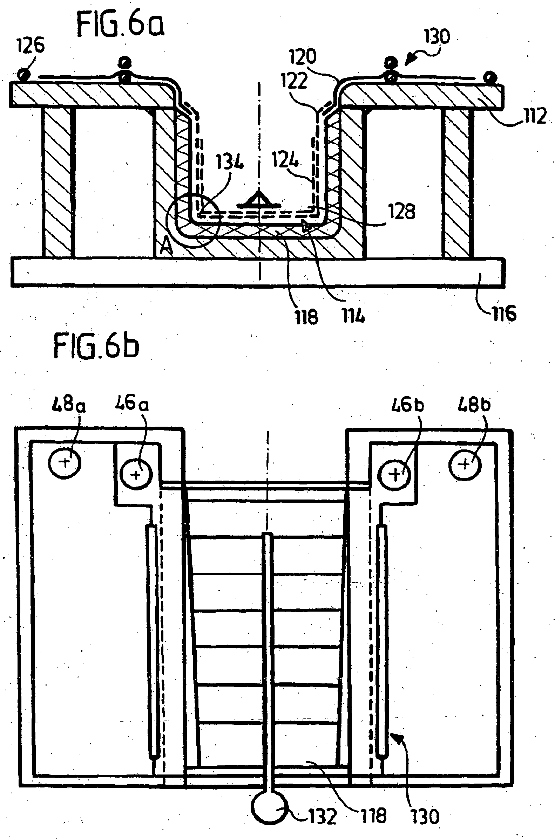

Zur Unterdruckbeaufschlagung des Faserhalbzeugs 12 zur Vakuuminjektion von Harz ist es dabei insbesondere vorgesehen, daß ein oder mehrere Vakuumports auch an dem Verteilergewebe 44 positioniert sind. Dies ist in Figur 6(b) durch die Vakuumports mit den Bezugszeichen 46a, 46b angedeutet, während die Vakuumports 48a und 48b außerhalb des Faserhalbzeugs positioniert sind. Erreicht die Fließfront des Harzes entsprechend solche Vakuumports, welche an dem Verteilergewebe positioniert sind, dann wird deren Unterdruckbeaufschlagung abgeschaltet, um ein Heraussaugen von Harz aus dem Werkstück zu vermeiden.

Zwischen dem Verteilergewebe 44 und dem Faserhalbzeug 12 wird vor der Harz-Infiltration eine Trennfolie 50 angeordnet, welche dazu dient, daß nach der Harzaushärtung das Verteilergewebe 44 von dem Werkstück leichter gelöst werden kann.

Weiterhin ist ein Peel-Ply 52 vorgesehen, welches auf dem Faserhalbzeug 12 unterhalb der Trennfolie 50 angeordnet wird (in Figur 1 aus Übersichtlichkeitsgründen nur teilweise gezeigt). Das Peel-Ply 52 hat die Aufgabe, eine definierte Werkstückoberfläche (Laminat-Oberfläche) zu erzeugen und damit zu gewährleisten, daß das Werkstück nach dem Aushärten des Harzes weiterverarbeitet werden kann. Das Peel-Ply 52 ist permeabel, so daß eine Harz-Infiltration des Faserhalbzeugs 12 über dieses hindurch erfolgen kann. Das Peel-Ply wird nach dem Aushärten des Harzes von der Werkstückoberfläche entfernt.

An dem Werkstückrand 52 ist ein Stoppbereich 54 als Harzbremse ausgebildet, welcher eine Barriere für dünnflüssiges Harz darstellt und verhindert, daß entsprechend niederviskoses Harz, mit welchem das Faserhalbzeug 12 infiltriert wurde, aus diesem wieder herausläuft. Beispielsweise umfaßt der Stoppbereich 54 ein einlagiges Peel-Ply mit einer Breite von beispielsweise 10 cm, welche um den Werkstückrand 42 gelegt wurde. Es ist dazu günstig, wenn einerseits der Stoppbereich mittels eines Dichtbands 56 gegenüber der Vakuumfolie 38 abgedichtet wird und andererseits mittels eines Dichtbands 58 gegenüber der Form 10 abgedichtet wird, wobei jedoch die Unterdruckbeaufschlagbarkeit des Faserhalbzeugs 12 gewährleistet sein muß.

Weiterhin ist es vorteilhaft, den Stoppbereich 54 auf eine niedrigere Temperatur als das Werkstück zu legen, so daß am Stoppbereich 54 die Fließfähigkeit des Harzes dort verringert ist.

Die Anordnung von Vakuumports kann dann dahingehend unterschiedlich sein, daß diese bezogen auf das Faserhalbzeug 12 innerhalb des Stoppbereichs liegen (Vakuumports 46a, 46b in Figur 6(b)) und/oder außerhalb des Stoppbereichs 54 liegen (Vakuumport 30 in Figur 1; Vakuumports 48a, 48b in Figur 6(b)).

Der Druck an dem Werkstück ist über mindestens einen Drucksensor 60 ermittelbar, welcher (welche mit dem Verteilergewebe 44 in Wirkverbindung bringbar ist (sind). Zur Druckabnahme ist dabei ein Anschlußflansch 62 mit einer großen Grundfläche vorgesehen, um Abdrücke auf der Werkstückoberfläche zu vermeiden und eine Verteilergewebe-Abklemmung zu verhindern. Der Anschlußflansch 62 ist dabei beispielsweise über einen Schlauch 64 mit dem Drucksensor 60 verbunden, wobei der Schlauch 64 über eine Schlauchklemme 66 abklemmbar ist. Die Schlauchklemme ist vorzugsweise direkt über dem Anschlußflansch 62 angeordnet, so daß kein Harz in den Schlauch 64 eindringen kann und den Drucksensor 60 beschädigen kann, wenn sie abklemmt. Es läßt sich dann erreichen, daß vor der Infiltration und während der Infiltration des Harzes am Werkstück über die Schlauchklemme 66 der Drucksensor 60 abkoppelbar ist und erst nach der vollständigen Injektion des Harzes die Druckmessung bewerkstelligt wird, indem zuerst nach Öffnung der Klemme die im Schlauch 64 verbliebene Luft über das Verteilergewebe 44 abgesaugt wird, und zwar bis der Druck im Schlauch 64 dem Druck im Faserhalbzeug 12 entspricht; mittels des Drucksensors 60 läßt sich dann die (Unter-)Druckbeaufschlagung des Faserhalbzeugs 12 messen.

Der Drucksensor 60 ist über eine Signalleitung 68 mit der Steuerungs- und Regelungsvorrichtung 20 verbunden, damit dieser die gemessenen Druckwerte übermittelt werden können.

Weiterhin können auch Temperatursensoren über das Verteilergewebe verteilt angeordnet sein, um eben entsprechende Temperaturmeßwerte zu erhalten und diese an die Steuerungs-und Regelungsvorrichtung 20 weiterzuleiten (nicht gezeigt).

Für die Harzzufuhr zu dem Faserhalbzeug 12 ist eine Zuführungsvorrichtung mit einem Vorratsbehälter 70 vorgesehen, der insbesondere über eine Heizung 72 beheizbar ist, um die Temperatur von injiziertem Harz einstellen zu können. Die Heizung 72 ist dazu über eine Steuerleitung 74 mit der Steuerungs- und Regelungsvorrichtung 20 verbunden.

Von dem Vorratsbehälter 70 für Harz führt eine Zuführungsleitung 76 zu dem Vakuumraum 78 zwischen Form 10 und Vakuumfolie 38. Die Zuführungsleitung 76 ist dabei insbesondere durch einen Silikonschlauch gebildet. Insbesondere erfolgt eine Zuführung von Harz von dem Vorratsbehälter 70 zu dem Faserhalbzeug 12, welches beispielsweise ein Laminat ist, um einen Linienanguß durchzuführen, vorzugsweise gesteuert, indem beispielsweise mittels einer Schlauchklemme an der Zuführungsleitung 76 der Durchfluß durch diese entsprechend gesteuert wird.

Bei einer Variante einer Ausführungsform ist eine online-Prozeßkontrolle bezüglich der Werkstückqualität durch Ultraschallbeaufschlagung des Werkstücks über eine Ultraschallprüfungseinrichtung 80 möglich. Insbesondere wird die Schallgeschwindigkeit und Schalldämpfung im Werkstück während des Herstellungsprozesses beispielsweise mittels eines Sensorpaares in Durchschaltung ermittelt. Ist das Harz ausgehärtet, dann ist die Ultraschalldämpfung minimal und die Schallgeschwindigkeit maximal; es läßt sich also über die Ultraschall-Prozeßkontrolle der Aushärtungsgrad ermitteln. Weiterhin lassen sich auch Aussagen über die Werkstückqualtität treffen.

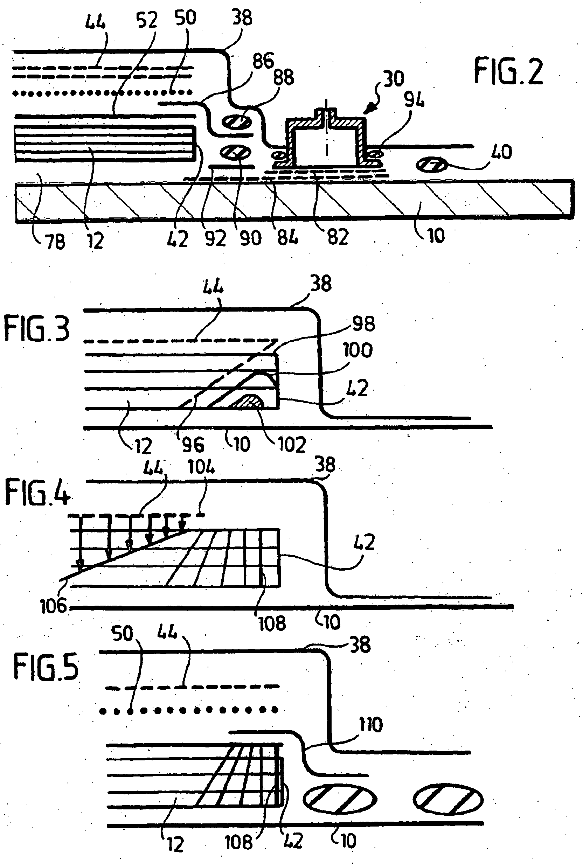

Bei einer erfindungsgemäßen Ausführungsform, welche in Figur 2 gezeigt ist, ist der Vakuumport 30 auf einem Verteilergewebestreifen 82 positioniert, welcher wiederum gegebenenfalls unter Zwischenschaltung einer Trennfolie auf der Form 10 positioniert ist. Elemente der Figur 2, die denjenigen in Figur 1 entsprechen, werden dabei mit dem gleichen Bezugszeichen wie dort bezeichnet. Der Verteilergewebestreifen 82 reicht unter das Faserhalbzeug 12 in einem breiten Bereich von beispielsweise 1 cm, wobei der Verteilergewebestreifen 84, auf welchem das Faserhalbzeug 12 angeordnet wird, insbesondere einlagig ist. Zwischen der Vakuumfolie 38 und einer Stoppfolie 86 ist eine Dichtung 88 angeordnet, mittels welcher der Vakuumport 30 gegenüber einer Oberseite des Faserhalbzeugs 12 abgedichtet wird. Weiterhin ist eine Dichtung 90 zwischen der Stoppfolie 86 und dem Verteilergewebestreifen 84 angeordnet, um eine Abdichtung der Vakuumfolie 38 gegenüber dem Faserhalbzeug 12 zu erreichen. Zwischen der Dichtung 88 und dem Verteilergewebestreifen 84 ist dabei ein Folienstreifen 92 vorgesehen, welcher verhindert, daß die Dichtung 88 den Verteilergewebestreifen 84 blockiert; der Folienstreifen 92 dient also als Abdeckung für den Verteilergewebestreifen 84.

Aufgrund dieser Anordnung der Dichtungen 88 und 90 erfolgt die Unterdruckbeaufschlagung des Faserhalbzeugs 12 vermittelt über den Verteilergewebestreifen 84 und es ist ein Stoppbereich am Rande 42 des Faserhalbzeugs 12 gebildet. Durch den Anschluß des Verteilergewebes 84 an die Unterseite des Faserhalbzeugs 12, wobei die Zuführung von Harz von der Oberseite her erfolgt, kann der Vakuumport 30 bis zur vollständigen Imprägnierung des Faserhalbzeugs 12 Luft aus dem Vakuumraum 78 ansaugen; dadurch läßt sich auf effektive Weise die Vakuuminjektion des Harzes durchführen.

Bei dem in Figur 2 gezeigten Ausführungsbeispiel ist die Vakuumfolie 38 an die Oberseite des Flansches 32 mittels eines ringförmigen Dichtbands 94 druckdicht angeschlossen.

In Figur 3 ist schematisch der Harzfrontverlauf gezeigt, wenn diese den Bauteilrand 42 erreicht, wobei das Verteilergewebe bündig mit dem Bauteilrand 42 endet. Erstreckt sich also das Verteilergewebe 44 bis zum Rand 42, dann ist ein Fließfrontwinkel gegenüber dem Faserhalbzeug 12 gebildet, wenn zu einem Zeitpunkt 96 die Harzfront den Rand 42 an einem oberen Ende 98 des Faserhalbzeugs 12 erreicht.

Am Rand 42 des Werkstücks sind Hohlräume und offene Fließkanäle vorhanden, welche beispielsweise durch nicht exakt zugeschnittene Gewebelagen oder durch Falten der Vakuumfolie 38 verursacht sind. Das Harz dringt in diese Hohlräume ein und kann das Werkstück von dem Rand 42 her einwärts infiltrieren, so daß sich eine gegenläufige Fließfront 100 ausbilden kann. Durch die zwei gegeneinander laufenden Fließfronten (Momentaufnahme 96 und Momentaufnahme 100) können Lufteinschlüsse 102 im Werkstück entstehen, die sich negativ auf die Bauteilqualität auswirken können.

Es werden Lufteinschlüsse wie der Lufteinschluß 102 dadurch vermieden, daß erreicht wird, daß das Verteilergewebe 44 ab einem bestimmten Abstand zu dem Werkstückrand 42 bezüglich der Harzzuführung unwirksam gemacht wird.

Bei einer Variante einer Ausführungsform, welche in Figur 4 gezeigt ist, endet dazu das Verteilergewebe 44 vor dem Rand 42, so daß zwischen einem Ende 104 des Verteilergewebes 44 und dem Werkstückrand 42 ein Abstand liegt, welcher insbesondere im Bereich zwischen 20 mm und 30 mm liegt. Erreicht die Harzfront das Ende 104 des Verteilergewebes 44 zu einem Zeitpunkt 106, so bildet sich der gleiche Fließwinkel wie in Figur 3 zum Zeitpunkt 96, sofern die weiteren Bedingungen entsprechend gleich sind. Der Fließfrontwinkel verringert sich aber mit zunehmender Zeit, da sich die Geschwindigkeit der Fließfront reduziert, da zwischen dem Ende 104 des Verteilergewebes 44 und dem Bauteilrand 42 von oben der Harzzufluß stark verringert ist. Mit zunehmender Zeit wird der Fließfrontwinkel immer steiler und idealerweise bildet sich eine senkrechte Fließfront 108 aus.

Die Geschwindigkeitsverringerung der Fließfront wird dadurch verursacht, daß die Harzfront im Faserhalbzeug 12 sehr viel langsamer läuft als im Verteilergewebe 44 und zum anderen mehr Harz auf einer kleineren Fläche herangeführt werden muß.

Es können sich dann keine gegenläufigen Fronten ausbilden und Lufteinschlüsse sind dadurch vermieden und das Faserhalbzeug 12 wird in der Nähe des Bauteilrands 42 gleichmäßiger infiltriert.

In Figur 5 ist eine Variante gezeigt, bei der das Verteilergewebe bündig mit dem Bauteilrand 42 endet. Jedoch ist der Bauteilrand mit einer Folie 110 abgedeckt, welche beispielsweise eine Breite von 50 mm aufweist. Die Trennfolie 50 und das Verteilergewebe laufen über die Folie 110. Die Folie 110 selber ist undurchlässig für das Harz. Die Harzzuführung zu dem Faserhalbzeug 12 ist also im Bereich der Folie 110 von oben her blockiert. Dies verursacht den gleichen Effekt, wie er anhand des Ausführungsbeispiels gemäß Figur 4 beschrieben wurde: Die Fließgeschwindigkeit des Harzes reduziert sich und der Fließfrontwinkel vergrößert wird und im Idealfall entsteht eine senkrechte Fließfront 108.

Bei einem Ausführungsbeispiel einer Vorrichtung zur Durchführung des erfindungsgemäßen Verfahrens ist, wie in Figur 6(a) gezeigt, eine einseitige Form 112 vorgesehen, welche eine Senke 114 aufweist, so daß auch Bauteile herstellbar sind, welche aneinandergrenzende Flügel aufweisen. Die Form 112 ist auf einer Grundplatte 116 montiert. Sie ist insbesondere heizbar.

Ein Faserhalbzeug 118 wird in der Senke 114 positioniert und ein Peel-Ply 120, eine Trennfolie 122 und ein Verteilergewebe 124 darauf positioniert. Eine Vakuumfolie (in der Figur 6(a) nicht gezeigt) wird mittels eines Dichtungsbands 126 druckdicht darüber angeordnet, um einen Vakuumraum 128 zu bilden, mittels dem Harz in das Faserhalbzeug 118 injizierbar ist.

Weiterhin ist eine Harzbremse 130 vorgesehen, welche wie bereits im Zusammenhang mit dem Stoppbereich 54 geschildert, das Herauslaufen von dünnflüssigem Harz verhindert.

Die Vakuumdruckbeaufschlagung über Vakuumport 46a, 46b, 48a, 48b erfolgt wie bereits im Zusammenhang mit dem Vakuumport 30 beschrieben.

Für das Harz ist ein Harzvorratsbehälter 132 vorgesehen.

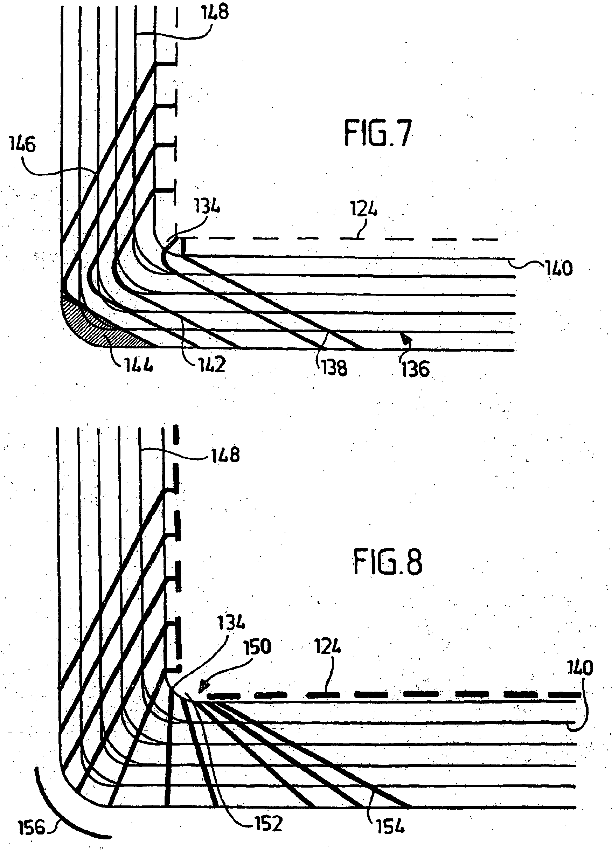

Grundsätzlich besteht die Gefahr, daß Lufteinschlüsse bei der Infiltration von umlaufenden Werkstückkanten 134 entstehen können, wie es beispielhaft in Figur 7 gezeigt ist, welche einen vergrößerten Ausschnitt des Bereichs A der Figur 6(a) darstellt. Das Verteilergewebe 124 macht an der Werkstückkante 134 einen Knick, um eben der Kontur des Faserhalbzeugs 118 zu folgen. Das Faserhalbzeug 118 weist beispielsweise eine Laminatstruktur 136 (Schichtstruktur) auf. Zu einem Zeitpunkt 138 hat die Harzfront in der Laminatstruktur 136 die Werkstückkante 134 erreicht und die Harzfront läuft mit unveränderter Geschwindigkeit um die Werkstückkante 134 herum. Die Zuführungsgeschwindigkeit des Harzes von dem Verteilergewebe 124 her senkrecht zu den Schichten 140 der Laminatstruktur ist dabei ebenfalls im wesentlichen konstant, so daß sich insgesamt ein bogenförmiger Fließfrontwinkelverlauf 142 im Bereich der Werkstückkante 134 ergibt. Dadurch entsteht aber die Gefahr, daß sich Lufteinschlüsse 144 in dem Werkstück nahe einer Oberfläche der Form 112 bilden können, da eine Fließfront 146 mit dem Fließfrontenwinkel in Schichten 148 senkrecht zu den Schichten 140 weiterläuft, während die Harzzufuhr zu dem Bereich 144 gestoppt ist.

Um dies zu vermeiden, wird, wie in Figur 8 gezeigt, das Verteilergewebe 124 an der Werkstückkante 134 geschnitten, so daß in diesem Bereich 150 das Verteilergewebe 124 nicht fortlaufend ist, sondern ein Spalt 152 zwischen den Schnittenden des Verteilergewebes 124 gebildet ist, welcher beispielsweise eine Breite von ca. 20 mm aufweist.

Zu einem Zeitpunkt 154 weist die Harzfront den üblichen Fließfrontwinkel auf, wenn diese weit entfernt ist von der Werkstückkante. Dadurch, daß auch über den Spalt 152 Harz der Laminatstruktur 136 zugeführt wird, benötigt die Harzfront eine längere Zeit, bis sie die Werkstückkante 134 durchlaufen hat. Es muß mehr Harz herangeführt werden, und in der Laminatstruktur 136 verläuft die Harzfront langsamer als in dem Verteilergewebe 124. Durch die Reduktion der Fließgeschwindigkeit wird der Fließfrontwinkel steiler und im Idealfall bildet sich eine senkrechte Fließfront aus. Nach dem Umfließen der Werkstückkante 134 kann sich dann in genügendem Abstand wieder der normale Fließfrontwinkel ausbilden. Durch das Steilerwerden der Fließfront ist die Gefahr der Entstehung von Lufteinschlüssen 144 stark verringert.

Um zu vermeiden, daß das Harz im Bereich der Werkstückkante 134 diese umfließen kann, ist eine sorgfältige Abdichtung 156 von entsprechenden Kantenenden vorgesehen.

Für die Infiltrierung des Faserhalbzeugs werden heißhärtende Harzsysteme eingesetzt, bei denen die zur Härtung notwendige Temperatur höher und insbesondere deutlich höher als Raumtemperatur ist (Hochtemperaturharze). Insbesondere können auch Polyadditionsharze zum Einsatz kommen wie Epoxidharze und Bismaleinharze.

Bei dem Verfahren läßt sich das Harzsystem Hexcel RTM6 einsetzen, welches eine Einsatztemperatur in der Größenordnung von bis zu ca. 180°C aufweist. Das Harzsystem Hexcel RTM6 ist für die Luftfahrt zugelassen.

Weitere Beispiele für einsetzbare Harzsystem sind PR500 (3M) oder ST1151 (SEP).

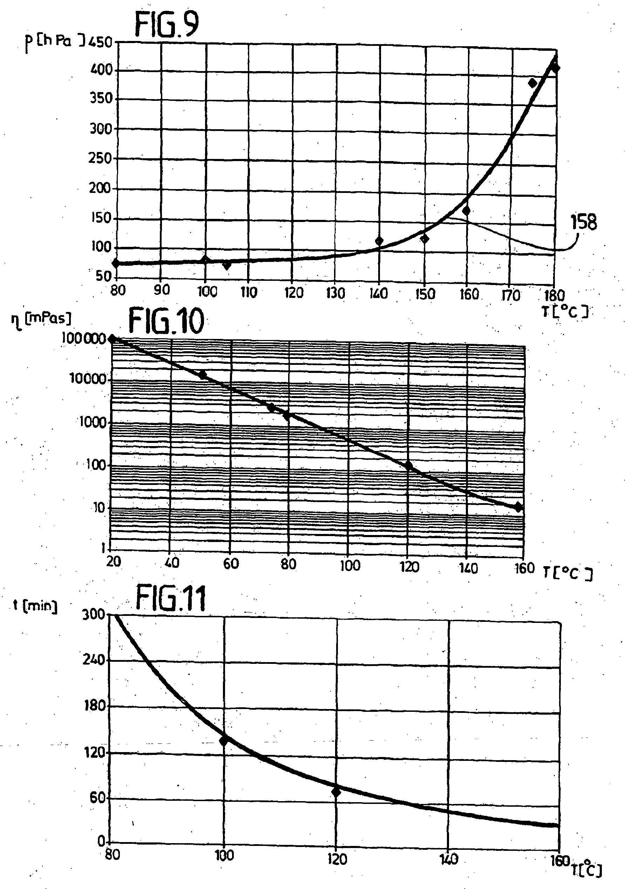

In Figur 9 ist der Verlauf der Siedepunktkurve 158 von RTM6 gezeigt. Oberhalb dieser Kurve liegt das Harz im flüssigen Aggregatszustand vor, unterhalb ist es gasförmig. Beim Überschreiten der Siedepunktkurve 158 entstehen Gasbläschen im Harz, die bei der Herstellung eines Bauteils unerwünscht sind.

Bei Temperaturen ab ca. 140°C steigt die Siedepunktkurve steil an, d. h. um bei einer Temperaturerhöhung des Harz flüssig zu halten, ist eine Druckerhöhung nötig (Verringerung der Unterdruckbeaufschlagung), wenn beispielsweise der Unterdruck in dem Vakuumraum 78 bzw. 128 beispielsweise 150 hPa beträgt.

In Figur 10 ist die Temperaturabhängigkeit der Viskosität von Hexcel RTM6 gezeigt, wobei auf der Ordinate die dynamische Viskosität in einer logarithmischen Skala aufgetragen ist. Man sieht, daß mit zunehmender Temperatur die Viskosität stark abnimmt. Ein sinnvoller Arbeitsbereich für die Infiltration von Faserhalbzeugen liegt bei Viskositäten im Bereich zwischen 1000 mPas und 100 mPas, d. h. bei Temperaturen zwischen ca. 90°C und ca. 120°C.

In Figur 11 ist die Temperaturabhängigkeit der Verarbeitungszeit t^{*} von Hexcel RTM6 gezeigt. Es besteht die Möglichkeit, RTM vorzualtern, indem es beispielsweise bei einer Temperatur von 120°C ca. 2 Stunden vorreagiert wird, bevor eine Infiltration des Faserhalbzeugs erfolgt. Dadurch läßt sich ein Viskositätsanstieg durch das Vorreagieren bewirken, wobei andererseits die Verarbeitungszeit verringert wird. Durch Vorreaktion des Harzes läßt sich also eine kürzere Gelierzeit einstellen und sich entsprechend die Verarbeitungszeit einstellen.

In Figur 11 ist die Verarbeitungszeit für vorreagiertes Harz gezeigt, welches bei einer Temperatur von ca. 110°C eine Viskosität von ungefähr 200 mPas aufweist anstatt von ca. 90 mPas bei nicht vorreagiertem Harz.

Das Verfahren funktioniert nun wie folgt:
Beispielsweise zur Herstellung eines Composite-Teils wird eine Form 112 verwendet. In die Form wird Faserhalbzeug 118 in entsprechender Ausgestaltung positioniert, wobei zwischen der Form und dem Faserhalbzeug vorzugsweise eine Trennfolie angeordnet wird. Es werden dann oberhalb des Faserhalbzeugs ein Peel-Ply 52 positioniert, eine Trennfolie 50 sowie ein Verteilergewebe 44. An Werkstückkanten 134 wird dabei das Verteilergewebe so geschnitten, wie es im Zusammenhang mit den Figuren 7 und 8 erläutert wurde. Weiterhin wird das Verteilergewebe am Werkstückrand 42 so positioniert, wie im Zusammenhang mit Figur 4 beschrieben bzw. es wird eine Folie 110 vorgesehen, wie im Zusammenhang mit Figur 5 beschrieben.

Es wird dann weiterhin die Vakuumfolie 38 angeordnet und eine Abdichtung durchgeführt, um entsprechend einen Vakuumraum 128 zu erzeugen. Die Unterdruckbeaufschlagung des Vakuumraums 128 erfolgt durch eine oder mehrere Vakuumpumpen 24, welche über Vakuumports 46a, 46b, 48a, 48b bzw. 30 auf den Vakuumraum 128 wirken.

Weiterhin werden Stoppbereiche 54 bzw. Harzbremsen 130 ausgebildet, um ein Auslaufen von dünnflüssigem Harz aus infiltriertem Faserhalbzeug 12 bzw. 118 weitgehend zu verhindern.

Vor und während der Harzinfiltration ist der Drucksensor 60, welcher über das Verteilergewebe 44 Druck aufnimmt, von diesem entkoppelt, indem die Schlauchklemme 66 auf den Schlauch 64 wirkt.

An der Vakuumpumpe 24 ist eine bestimmte Leistung eingestellt, welche zu einer bestimmten Unterdruckbeaufschlagung führt, die entsprechend gesteuert eingestellt ist. Insbesondere erfolgt diese gesteuerte Einstellung über die Steuerungs- und Regelungsvorrichtung 20.

Die Form 112 wird auf einer bestimmten Temperatur gehalten. Das Harz in dem Vorratsbehälter 70 bzw. 132 wird ebenfalls auf einer bestimmten Temperatur gehalten, um eine Zuführbarkeit (Fließfähigkeit) zum Halbzeug sicherzustellen. Übliche Temperaturen für Hexcel RTM6 sind 90°C bis 120°C. Die Temperatur bei der Harzinjektion wird dabei über die Temperatursensoren 16 überwacht und/oder über Temperatursensoren, welche an dem Verteilergewebe angeordnet sind.

Die Harzinfiltration wird durch die Steuerungs- und Regelungsvorrichtung 20 überwacht.

Die Harzzuführung über die Zuführungsleitung 76 ist gesteuert.

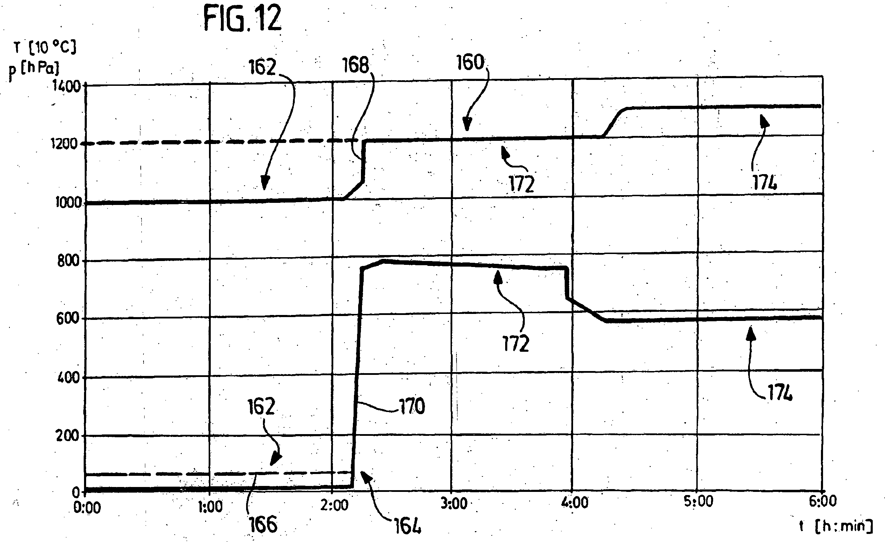

Beispielsweise wird nun das Harz bei einer Temperatur von 100°C dem Faserhalbzeug 12 zugeführt, wobei durch den Unterdruck im Vakuumraum 78 dieses in das Faserhalbzeug injiziert wird. In Figur 12 ist schematisch ein Temperaturverlauf 160 bei der Herstellung des Bauteils gezeigt. Bei einer Injektionsphase 162 ist für ca. 2 Stunden und 10 Minuten die Temperatur eben im wesentlichen auf 100°C konstantgehalten, oder bei einer alternativen Variante bei 120°C konstantgehalten. Der über die Pumpleistung der Vakuumpumpe 24 eingestellte Unterdruck liegt dabei so, daß die Siedepunktkurve 158 des Harzsystems nicht überschritten wird, d. h. daß sich keine Gasblasen bilden können, die sonst nicht mehr aus dem Werkstück entfernt werden könnten. Schematisch ist dazu für ein Ausführungsbeispiel ein Druckverlauf 164 gezeigt. Der erforderliche Unterdruck 166 ist über die Steuerungs- und Regelungseinrichtung 20 mittels der Pumpleistung eingestellt.

Die Injektionsphase 162 wird dadurch beendet, daß die Temperatur erhöht wird (Bezugszeichen 168 in Figur 12). Die Steuerungs- und Regelungseinrichtung verringert gleichzeitig die Unterdruckbeaufschlagung (erhöht den Druck), wie es in Figur 12 durch das Bezugszeichen 170 angedeutet ist. Dadurch wird vermieden, daß die Siedepunktkurve 158 überschritten wird, da eben die Siedepunktkurve mit Temperaturerhöhung monoton zunimmt.

Weiterhin wird durch die Druckerhöhung ein Ausgasen des Harzes verringert. Darüber hinaus wird dadurch die Gefahr des Aussaugens von Harz aus dem mit Harz getränkten Faserhalbzeug 12 verringert.

Die Temperatur von beispielsweise 120°C während einer solchen Härtungsphase 172, welche sich an die Injektionsphase 162 anschließt, wird dann über einen bestimmten Zeitraum von beispielsweise 2 Stunden aufrechterhalten und ebenso wird eine im wesentlichen konstante Unterdruckbeaufschlagung aufrechterhalten.

Es wird dann durch eine weitere Temperaturerhöhung beispielsweise auf 120°C eine weitere Härtungsphase 174 eingeleitet, in welcher die endgültige Aushärtung erfolgt. In dieser Härtungsphase 174 ist das Harz schon ausgehärtet, daß die Gefahr der Siedeblasenbildung und die Gefahr der Harzaussaugung nicht mehr besteht. Der Zeitraum für die endgültige Aushärtung kann beispielsweise 2 Stunden betragen.

Während der Injektionsphase 162 erfolgt die Harzzuführung zu dem Faserhalbzeug 12 im wesentlichen mittels des Verteilergewebes 44, welches als Fließhilfe dient. In dem Verteilergewebe sind Fließkanäle gebildet, wobei der Harzfluß aufgrund des Druckgefälles erfolgt.

Der Vakuumport 30 (bzw. 48a, 48b) ist so weit weg von dem Faserhalbzeug 12 und einem Bauteilrand 42 positioniert, daß er durch das Harz erst erreicht wird, wenn das Faserhalbzeug 12 vollständig mit Harz getränkt ist, d. h. eine Harzfront dieses vollständig durchlaufen hat. Es kann weiterhin ein Unterdruck in dem Vakuumraum 78 angelegt werden, um eine vollständige Harzinfiltration zu erreichen. Der Aufnahmeraum 36 kann dabei entsprechend seinem Volumen Harz aufnehmen, ohne daß dieses in das Vakuumsystem (Saugleitung 28, Vakuumpumpe 24) eingesaugt wird.

Eine weitere Harzfalle kann mittels des Vorratsbehälters 70 bzw. 132 gebildet werden: Wird nach Infiltration des Faserhalbzeugs 12 der Vorratsbehälter 70 mit einem Deckel verschlossen, dann läßt sich so ein Absaugbehälter schaffen. Es wird dann der Unterdruck gleichmäßig über einen Angußkanal, welcher mit der Zuführungsleitung 76 verbunden ist, und das Verteilergewebe 44 über das gesamte Werkstück verteilt. Ist der Unterdruck entsprechend so eingestellt, daß der Harzspiegel in der Zuführungsleitung 76, welche ein Steigleitungsteil umfaßt, bis kurz unter den Vorratsbehälter 70 als Absaugebehälter ansteigen kann, dann kann bei entsprechender Wahl des Innendurchmessers der Zuführungsleitung 76 verhindert werden, daß Harz in den Absaugebehälter 70 gedrückt wird und es ist sichergestellt, daß nur Luft- und Gasblasen aufsteigen können.

Mittels der Heizung 72 läßt es sich auch einrichten, daß nach der Infiltration der Absaugebehälter 70 eine niedrigere Temperatur als die Form 12 aufweist, so daß das Harz im Absaugebehälter zuletzt geliert.

Bei Beendigung der Infiltrationsphase (Injektionsphase) 162 wird die Schlauchklemme 66 gelöst; die dabei im Schlauch 64 verbliebene Luft wird über das Verteilergewebe 44 aufgrund des Unterdrucks im Vakuumraum 78 abgesaugt, bis ein Druckausgleich erfolgt. Der Drucksensor 60 kann dann den entsprechenden anstehenden Druck im Vakuumraum 78 und damit im Werkstück ermitteln, um so bei einer Temperaturerhöhung und/oder Druckerhöhung die Siedeblasenbildung zu verhindern, indem eben dann der Druck entsprechend gesteuert bzw. geregelt wird, um die Siedepunktkurve nicht zu überschreiten.

Es lassen sich damit neben Kleinbauteilen auch große Bauteile im Vakuumdruck herstellen, ohne daß ein Autoklav vorgesehen werden muß, wobei sehr gute Bauteilqualitäten erreichbar sind. Gleichzeitig lassen sich aber die Fertigungskosten stark senken, da eben kein Autoklav vorgesehen werden muß. Erfindungsgemäß lassen sich also auch großflächige Bauteile mittels Vakuuminjektion von Harz herstellen.

## Patentansprüche

1. Vorrichtung zur Durchführung eines Verfahrens zur Herstellung eines Bauteils aus einem faserverstärkten Werkstoff, bei welchem einem Faserhalbzeug mittels Unterdruckbeaufschlagung flüssiges Harz zugeführt wird, als Harz ein heißhärtendes Harz verwendet wird und während der Harz-Infiltration Unterdruckbeaufschlagung und Temperatur so gesteuert und/oder geregelt werden, dass bezogen auf das flüssige Harz die Siedepunktkurve des Harzes nicht überschritten wird, wobei die Vorrichtung mindestens einen Vakuumport (30; 46a, 46b, 48a, 48b) zur Unterdruckbeaufschlagung eines Werkstücks umfasst, wobei der Vakuumport als Harzfalle ausgebildet ist, welche eine bestimmte Menge an Harz aufnehmen kann, um das Eindringen von Harz in ein Vakuumsystem (24, 28), welches mit dem Vakuumport verbunden ist, zu verhindern, und wobei der Vakuumport (30) mit einer Vakuumpumpe (24) verbunden ist, **dadurch gekennzeichnet, dass** der Vakuumport (30) einen Aufnahmeraum (36) für Harz umfasst, welcher in einem becherförmigen Aufnahmeelement (34) gebildet ist, dass der Vakuumport (30) einen Auflageflansch (32) zur Positionierung auf einem Verteilergewebe (84), mittels welchem dem Faserhalbzeug (12) Harz zuführbar ist, aufweist, welcher an dem Aufnahmeelement (34) gebildet ist, dass der Aufnahmeraum (36) auf einer Seite mit der Vakuumpumpe (24) in Verbindung steht und auf der anderen Seite hin offen ist, so dass über ihn eine Wirkverbindung zur Unterdruckbeaufschlagung des Werkstücks herstellbar ist, wobei eine Wirkverbindung des Vakuumports (30) mit der Vakuumpumpe (24) steuerbar unterbrechbar ist, und dass das Verteilergewebe (84), auf welchem der Vakuumport (30) positioniert ist, bezogen auf eine Zuführungsrichtung des Harzes unterhalb des Faserhalbzeugs (12) angeordnet ist.

2. Vorrichtung nach Anspruch 1, **dadurch gekennzeichnet, dass** der Vakuumport (30) an oder in einem Abstand zu einem Rand (42) eines Werkstücks positionierbar ist, welcher durch eine Fließfront des injizierten Harzes zuletzt erreicht wird.

## Claims

1. Apparatus for carrying out a method for manufacturing a component from a fibre reinforced material, wherein liquid resin is supplied to a semifinished fibre article by way of application by vacuum pressure, a heat curing resin is used as resin and during the resin infiltration application by vacuum pressure and temperature are controlled such that in relation to the liquid resin the boiling point curve of the resin is not exceeded, said apparatus comprising at least one vacuum port (30; 46a, 46b, 48a, 48b) for applying vacuum pressure to a workpiece, wherein the vacuum port is designed as a resin trap able to accommodate a certain amount of resin in order to prevent resin from passing into a vacuum system (24, 28) connected to the vacuum port, and wherein the vacuum port (30) is connected to a vacuum pump (24), **characterized in that** the vacuum port (30) comprises a chamber (36) for accommodating resin and formed in a beaker-like receiving element (34), that the vacuum port (30) has a contact flange (32) for the positioning on a distribution fabric (84), resin being suppliable to the semifinished fibre article (12) by way of said fabric and said contact flange being formed on the receiving element (34), that the chamber (36) communicates on one side with the vacuum pump (24) and is open on the other side so that an operative connection for applying vacuum pressure to the workpiece is provided via said pump, wherein an operative connection of the vacuum port (30) to the vacuum pump (24) is able to be interrupted in a controllable manner, and that the distribution fabric (84), on which the vacuum port (30) is positioned, is arranged beneath the semifinished fibre article (12) in relation to a supply direction of the resin.

2. Apparatus as defined in claim 1, **characterized in that** the vacuum port (30) is positionable at or within a distance to an edge (42) of a workpiece, said edge being the last edge reached by a flow front of the injected resin.

## Revendications

1. Dispositif pour la réalisation d'un procédé de fabrication d'un composant en un matériau renforcé par des fibres, où à un demi-produit fibreux est fourni au moyen d'une sollicitation en dépression de la résine liquide, une résine thermodurcissable est utilisée comme résine et pendant l'infiltration de résine la sollicitation en dépression et la température sont commandées et/ou régulées de sorte que par rapport à la résine liquide la courbe de point d'ébullition de la résine ne soit pas dépassée, dans lequel le dispositif comprend au moins un orifice à vide (30 ; 46a, 46b, 48a, 48b) pour la sollicitation en dépression d'une pièce, dans lequel l'orifice à vide est réalisé comme un piège à résine qui peut recevoir une quantité déterminée de résine afin d'empêcher la pénétration de résine dans un système de vide (24, 28) qui est raccordé à l'orifice à vide, et dans lequel l'orifice à vide (30) est raccordé à une pompe de vide (24), **caractérisé en ce que** l'orifice à vide (30) comprend un espace de réception (36) pour de la résine qui est formé dans un élément de réception (34) en forme de coupe, que l'orifice à vide (30) présente une bride d'appui (32) pour le positionnement sur un tissu de distribution (84) au moyen duquel de la résine peut être fournie au demi-produit fibreux (12), qui est formé sur l'élément de réception (34), que l'espace de réception (36) est en liaison sur un côté avec la pompe de vide (24) et est ouvert vers l'autre côté de sorte que par celui-ci une liaison active puisse être établie pour la sollicitation en dépression de la pièce, dans lequel une liaison active de l'orifice à vide (30) peut être interrompue de manière commandable avec la pompe de vide (24), et que le tissu de distribution (84) sur lequel l'orifice à vide (30) est positionné est agencé par rapport à un sens d'alimentation de la résine en dessous du demi-produit fibreux (12).

2. Dispositif selon la revendication 1, **caractérisé en ce que** l'orifice à vide (30) peut être positionné au niveau ou à une distance d'un bord (42) d'une pièce qui est atteint au final par un front d'écoulement de la résine injectée.
